# EUROPÄISCHE PATENTSCHRIFT

(11) **EP 1 167 017 B1**
(45) Veröffentlichungstag und Bekanntmachung des Hinweises auf die Patenterteilung: **11.08.2010**
(21) Anmeldenummer: 01114024.1
(22) Anmeldetag: 08.06.2001
(51) Int. Cl.: B32B 27/32

(54) **Verpackungsfolie mit verbesserter Packungsdichtigkeit, Verfahren zu ihrer Herstellung sowie deren Verwendung als Verpackungsfolie**
Packaging film with improved packaging tightness, process of making and use as packaging material
Film d'emballage avec étanchéité améliorée, son procédé de fabrication et son utilisation

(30) Priorität: 21.06.2000 DE 10030377
(43) Veröffentlichungstag der Anmeldung: 02.01.2002
(73) Patentinhaber: Wipak Walsrode GmbH & Co. KG, 29656 Walsrode (DE)
(72) Erfinder: Sperlich, Bernd, Dr., 29664 Walsrode (DE); Wagner, Helmut, 29699 Bomlitz (DE); Schwarz, Willi, 29699 Bomlitz (DE); Wunderlich, Hans, Dr., 29699 Bomlitz (DE)
(74) Vertreter: Lins, Martina

(56) Entgegenhaltungen:
- EP-A- 0 291 098
- EP-A- 0 507 351
- EP-A- 0 538 747
- US-A- 4 522 887

## Beschreibung

Die vorliegende Erfindung betrifft Folienverbunde, insbesondere Folienverbunde für Verpackungszwecke. Die Erfindung betrifft außerdem ein Verfahren zur Herstellung dieser Folienverbunde sowie ihre Verwendung.

Folienverbunde aus biaxial orientierten Polypropylenfolien sind aufgrund ihrer guten Barriere gegenüber den verschiedensten Gasen (z.B. Wasserdampf, Sauerstoff, Aromen) für den Einsatz als Verpackungsfolie für empfindliche Füllgüter besonders geeignet.

Aus US 4,522,887 ist ein Filmlaminat bekannt, welches aus einem biaxial orientierten Polypropylenfilm (OPP) einerseits und einem Olefinpolymer mit ethylenischer und mit propylenischer Komponente andererseits besteht, das ausgezeichnet mattiert und gleichzeitig lichtdurchlässig ist,

Die EP 0 507 351 A2 offenbart ein Verpackungsmaterial für Photofilme, das flexibel ist, schwer reißt, nicht leicht einrollt und zu Schlauchbeuteln verarbeitet werden kann. das Laminat enthält unter anderem eine Olefinschicht und eine Polyethylen-Copolymerisatschicht.

Aus der US 3,559,800 ist ein Folienverbund für Beutel bekannt, der eine innere zum Füllgut gewendete Lage und eine äußere Lage aufweist. Beide Lagen werden nur in einem Randbereich mit Klebstoff verbunden. Dieser Randbereich überdeckt dort vorgesehene Perforierungen.

Aus der US 3,939,972 ist ein schlauchförmiges Laminat mit äußerer und innerer Folie ohne Längsnaht bekannt, bei dem das äußere Laminat LDPE-basiert und das innere Laminat Ionomer-, Polyamid- oder Polyethylen-basiert ist.

Die US 5,689,935 offenbart ein Verfahren zum Erzeugen eines vorhersehbaren Einreißweges über die Quernaht einer Beutelverpackung, bei welchem an einer verbreiterten Siegelnaht ein coextrudiertes Laminat aus Polyethylen/Polypropylen/Polyethylen zwischen einem inneren und einem äußeren Plastikfilm verwendet wird. Bei den Plastikfilmen kann es sich um OPP-Folien handeln.

Solche Folienverbunde werden üblicherweise dadurch hergestellt, dass zwei siegelbare, biaxial orientierte Polypropylenfolien mittels Klebstoffauftrag verbunden werden. Dabei ist normalerweise die eine Folie bedruckt, während die andere Folie transparent oder metallisiert ist. Auf entsprechenden Verpackungsmaschinen werden aus diesen Folienverbunden Packungen mit dem Füllgut durch Versiegeln der Packungsöffnungen hergestellt. Normalerweise weisen solche Packungen in Laufrichtung der Folie eine sogenannte Längsnaht sowie quer zur Laufrichtung der Folie die sogenannte Kopf- und Bodennaht auf (Bild 1). Die Diffusion von Gasen erfolgt sowohl durch die Folie selbst als auch durch die Kanülen der Packung, die beim Siegelvorgang entstehen. Der größte Einfluss kommt dabei den Ecken der Packung zu, welche nach dem Siegelvorgang immer mehr oder weniger große unversiegelte Kanülen aufweisen. Diese Kanülen wirken sich negativ auf die Dichtigkeit der Packung und damit auf die Haltbarkeit des Produktes aus. Die Größe der Kanülen hängt sowohl von den Verpackungsbedingungen (Siegeltemperatur, Siegeldruck) als auch von der Folie selbst ab.

Es stellt sich somit die Aufgabe, eine Verbundfolie aus biaxial orientierten Polypropylenfolien bereitzustellen, welche nach dem Versiegeln eine besonders gute Kanülendichtigkeit aufweist und damit die Herstellung besonders dichter Packungen erlaubt.

Erfindungsgemäß gelang dies durch eine Verbundfolie aus einer siegelbaren, biaxial gereckten Polypropylenfolie (A) mit einer Siegelschicht und einer biaxial gereckten Polypropylenfolie (B), wobei die Polypropylenfolie (B) transparent oder bedruckt ist und wobei sich zwischen den Folien (A) und (B) eine Schicht aus Polyethylen befindet. Die aus dieser Verbundfolie auf einer marktübliche Verpackungsmaschine hergestellten Schlauchbeutel weisen eine höhere Kanülendichtigkeit auf als eine analoge Verbundfolie ohne die Zwischenschicht aus Polyethylen.

Die biaxial orientierten Polypropylenfolien (A) und (B) können Gleitmittel, Antistatikadditive sowie Antiblockmittel enthalten.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%, Ein insbesondere geeignetes aliphatisches Säureamid ist Erucasäureamid.

Bevorzugte Antistatikadditive sind alkali-alkansulfonate, polyethermodifizierte, d.h. ethoxylierte und/oder propoxylierte Polydorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C1-C4)-alkyl-Gruppen substituiert sind, wobei N,N-bis-(2-hydroxethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 Gew.-% als Antistatikum eingesetzt.

Geeignete Antiblockmittel sind anorganische Zusatzstoffe wie Siliciumdioxid, Calciumcarbonat, Magnesiumsilicat, Aluminiumsilikat, Calciumphosphat und dergleichen und/oder vernetzte Polymerteilchen, wie z.B. vernetzte Polymethacrylate oder vernetzte Polyalkylsiloxane und/oder unverträgliche organische Polymerisate wie Polyamide, Polyacrylate, Polymethacrylate, Polyester, Polycarbonate und dergleichen, bevorzugt wird Siliciumdioxid eingesetzt. Bei teilchenförmigen Abstandshaltern liegt die mittlere Teilchengröße zwischen 1 und 10 µm, insbesondere 2 und 5 µm.

Die Folien (A) und (B) sind bevorzugt 2- oder 3-schichtig mit jeweils 0,5 bis 3 µm dicken Siegelschichten. Bei einem 2-schichtigen Aufbau der Folien (A) und/oder (B) erfolgt die Kaschierung dieser Folien in der Weise, dass die Siegelschicht im Folienverbund außen liegen. Die Siegelschichten können aus folgenden Materialien bestehen:
- statistische Propylen/Ethylen -Copolymere
- statistische Propylen/Olefin (1) -Copolymere
- statistische Propylen/Ethylen/Olefin-Terpolymere
- Mischungen aus zwei oder drei der vorstehenden Polymere.

Besonders bevorzugt wird ein Propylen/Ethylen-Copolymerisat, dadurch gekennzeichnet, dass es 1,0 bis 10 Gew.-% Ethylen enthält. Die Dichte des Siegelschichtpolymeren sollte vorzugsweise im Bereich von 0,895 bis 0,960 g/cm³ und der Kristallitschmelzpunkt je nach Typ im Bereich von 100 bis 148°C liegen.

Der Folienkern der Folien (A) und (B) besteht aus einem isotaktischen Polypropylen mit einer Dichte von 0,90 bis 0,91 g/cm³ und einem Schmelzflussindex von 1 bis 4 g/10 min bei 230°C/21,6 N/cm² Druck (DIN 53 735).

Die Folien (A) und (B) haben jeweils eine bevorzugte Dicke von 12 - 30 µm. Die Schicht aus Polyethylen hat eine bevorzugte Dicke von 3 - 15 µm und eine besonders bevorzugte Dicke von 5 - 12 µm.

Das Polyethylen, welches sich zwischen den Folien (A) und (B) befindet, hat bevorzugt eine Dichte von 0,91 bis 0,94 g/cm³ und einen MFI von 0,3 bis 30 g/10 min (ASTM D 1238).

In einer bevorzugten Ausführungsform weist die biaxial orientierte Polypropylenfolie (A) eine im Vakuum aufgedampfte Barriereschicht auf. Dabei kann es sich um eine Barriereschicht aus Aluminium, Siliciumoxid oder Aluminiumoxid handeln. Besonders bevorzugt ist Aluminium. In dieser Ausführungsform werden die Folien (A) und (B) derartig verbunden, dass sich die aufgedampfte Barriereschicht innen befindet.

In einer bevorzugten Ausführungsform wird die Schicht aus Polyethylen dadurch aufgebracht, dass eine Folie aus Polyethylen (C) mit der Polypropylenfolie (B) unter erhöhtem Druck und erhöhter Temperatur verbunden wird und dieser Folienverbund (D) anschließend mit der Polyethylenseite gegen die Polypropylenfolie (A) mittels Klebstoffauftrag kaschiert wird. Die Folie aus Polyethylen wird nach üblichen Verfahren entweder als Flachfolie oder als Schlauchfolie hergestellt. Die Laminierung mit der Polypropylenfolie (B) erfolgt bei einer Temperatur zwischen 100°C und 150°C. Die Laminierung kann vor oder nach der Orientierung der Polypropylenfolie (B) erfolgen. Besonders bevorzugt ist die Laminierung zwischen den beiden Orientierungsschritten (Orientierung in Maschinenlaufrichtung und senkrecht zur Maschinenlaufrichtung) der Folie. In einer bevorzugten Ausführungsform wird der Folienverbund (D) bedruckt und anschließend mit der bedruckten Seite gegen die Polypropylenfolie (A) mittels Klebstoffauftrag kaschiert.

In einer anderen bevorzugten Ausführungsform wird die Schicht aus Polyethylen dadurch aufgebracht, dass eine Folie aus Polyethylen (C) mit der Polypropylenfolie (A) unter erhöhtem Druck und erhöhter Temperatur verbunden wird und dieser Folienverbund (E) anschließend mit der Polyethylenseite gegen die Polypropylenfolie (B) mittels Klebstoffauftrag kaschiert wird. Die Folie aus Polyethylen wird nach üblichen Verfahren entweder als Flachfolie oder als Schlauchfolie hergestellt. Die Laminierung mit der Polypropylenfolie (B) erfolgt bei einer Temperatur zwischen 100°C und 150°C. Die Laminierung kann vor oder nach der Orientierung der Polypropylenfolie (B) erfolgen. Besonders bevorzugt ist die Laminierung zwischen den beiden Orientierungsschritten (Orientierung in Maschinenlaufrichtung und senkrecht zur Maschinenlaufrichtung) der Folie. In einer bevorzugten Ausführungsform wird die Polyethylenseite des Folienverbundes (E) im Vakuum mit einer Barriereschicht bedampft und anschließend gegen die Polypropylenfolie (B) mittels Klebstoffauftrag kaschiert. Dabei kann es sich um eine Barriereschicht aus Aluminium, Siliciumoxid oder Aluminiumoxid handeln. Besonders bevorzugt ist Aluminium. In dieser Ausführungsform werden die Folien (A) und (B) derartig verbunden, dass sich die aufgedampfte Barriereschicht innen befindet.

In einer anderen bevorzugten Ausführungsform wird die Schicht aus Polyethylen dadurch aufgebracht, dass das Polyethylen in einem Extruder aufgeschmolzen wird und zwischen den Polypropylenfolien (A) und (B) aufgetragen wird, wobei die Folien (A) und (B) durch Aushärtung des Polyethylens verbunden werden. In einer bevorzugten Ausführungsform wird die Folie (A) im Vakuum mit einer Barriereschicht bedampft und anschließend gegen die Polypropylenfolie (B) kaschiert. Dabei kann es sich um eine Barriereschicht aus Aluminium, Siliciumoxid oder Aluminiumoxid handeln. Besonders bevorzugt ist Aluminium. In dieser Ausführungsform werden die Folien (A) und (B) derartig verbunden, dass sich die aufgedampfte Barriereschicht innen befindet.

In einer anderen Ausführungsform befinden sich zwischen den Folien (A) und (B) mehrere Schichten aus Polyolefinen, von denen mindestens eine Schicht aus Polyethylen besteht und diese Schichten durch Coextrusion aufgetragen werden.

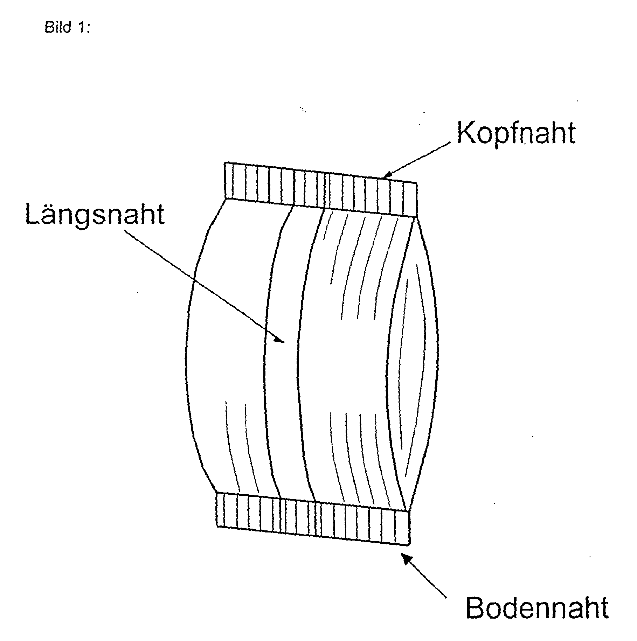

- Fig. 1:: Schematische Darstellung einer Folienpackung (1): Kopfnaht, (2): Längsnaht (3): Bodennaht

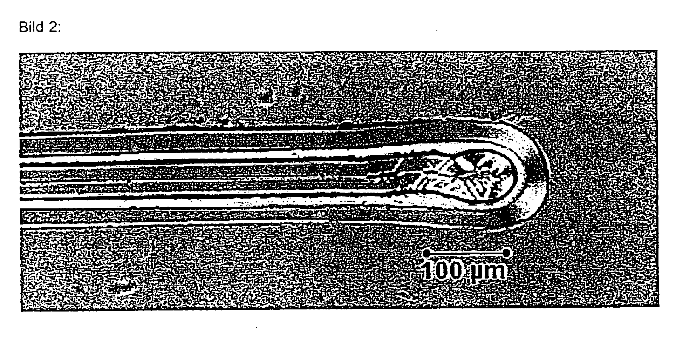

- Fig. 2:: Dünnschnitt einer Ecke der Bodennaht eines Beutels, der aus einem Folienverbund gemäß Beispiel 1 hergestellt wurde (erfindungsgemäßer Folienverbund)

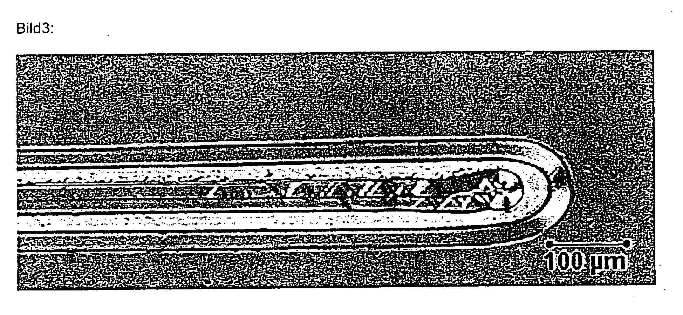

- Fig. 3:: Dünnschnitt einer Ecke der Bodennaht eines Beutels, der aus einem Folienverbund gemäß Beispiel 2 hergestellt wurde (erfindungsgemäßer Folienverbund)

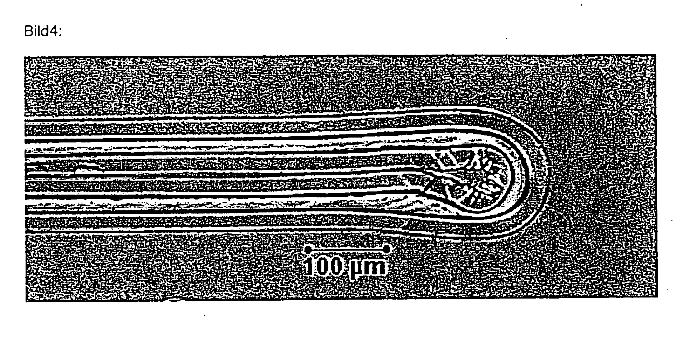

- Fig. 4:: Dünnschnitt einer Ecke der Bodennaht eines Beutels, der aus einem Folienverbund gemäß Beispiel 3 hergestellt wurde (erfindungsgemäßer Folienverbund)

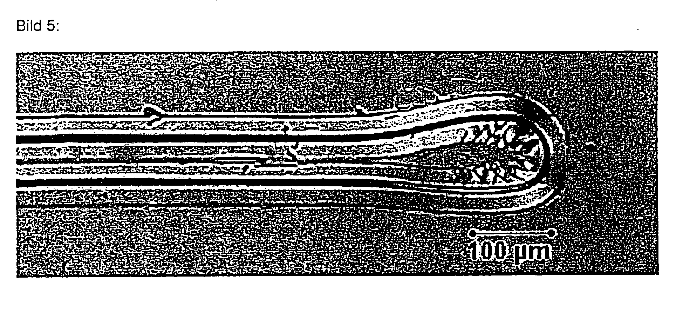

- Fig. 5:: Dünnschnitt einer Ecke der Bodennaht eines Beutels, der aus einem Folienverbund gemäß Beispiel 4 (Vergleichsbeispiel) hergestellt wurde.

### Beispiele

### Beispiel 1

Eine zweischichtige Folie der Dicke 750 µm mit einer Schicht aus Polypropylen (Dichte: 0,905 g/cm³, Schmelzflussindex: 3 g/10 min bei 230°C/21,6 N/cm²) der Dicke 700 µm und einer Schicht aus Propylen-Ethylen-Copolymer (4,5 % Ethylen Monomergehalt, MFI=5 g/10 min (230°C/21,6 N/cm²), Dichte: 0,90 g/cm³), welche 0,1 % SiO₂ und 1 % Polydimethylsiloxan enthält und eine Dicke von 50 µm aufweist, wird coextrudiert und bei einer Temperatur von ca. 145°C und einem Verstreckungsfaktor von 5 in Maschinenrichtung gereckt. Anschließend wird die Folie auf der anderen Seite der Copolymer-Schicht mit einer Polyethylenfolie (MFI=7,5 g/10min (ASTM D 1238); Dichte: 0,9155 g/cm³) der Dicke 70 µm bei einer Temperatur von ca. 140°C verbunden, dann mit einem Verstreckungsfaktor von 10 senkrecht zur Maschinenrichtung gereckt und schließlich auf der Polyethylenseite coronavorbehandelt. Die Gesamtdicke der Folie beträgt nach dem Reckvorgang 22 µm. Diese Folie wird anschließend mit einer metallisierten BOPP-Folie (CM 15 M der Fa. Walothen GmbH) klebstoffkaschiert, so dass die Polyethylenschicht und die Metallschicht innen liegen.

### Beispiel 2

Eine zweischichtige Folie der Dicke 750 µm mit einer Schicht aus Polypropylen (Dichte: 0,905 g/cm³, Schmelzflussindex: 3 g/10 min bei 230°C/21,6 N/cm²) der Dicke 700 um und einer Schicht aus Propylen-Ethylen-Copolymer (4,5 % Ethylen Monomergehalt, MFI=5 g/10 min (230°C/21,6 N/cm²), Dichte: 0,90 g/cm³), welche 0,1 % SiO₂ enthält und eine Dicke von 50 µm aufweist, wird coextrudiert und bei einer Temperatur von ca. 145°C und einem Verstreckungsfaktor von 5 in Maschinenrichtung gereckt. Anschließend wird die Folie auf der anderen Seite der Copolymer-Schicht mit einer Polyethylenfolie (MFI=7,5 g/10 min (ASTM D 1238); Dichte: 0,9155 g/cm³) der Dicke 70 µm bei einer Temperatur von ca. 140°C verbunden, dann mit einem Verstreckungsfaktor von 10 senkrecht zur Maschinenrichtung gereckt und schließlich auf der Polyethylenseite coronavorbehandelt. Die Gesamtdicke der Folie beträgt nach dem Reckvorgang 22 µm. Diese Folie wird anschließend auf der Polyethylenseite im Vakuum mit Aluminium bedampft (optische Dichte = 2,3) und mit einer bedruckten BOPP-Folie (C 15 EHS der Fa. Walothen GmbH) klebstoffkaschiert, so dass die Metallschicht und die Druckfarbe innen liegen.

### Beispiel 3

Eine metallisierte BOPP-Folie (CM 15 M der Fa. Walothen GmbH) und eine bedruckte BOPP-Folie (C 15 EHS der Fa. Walothen GmbH) werden in der Weise verbunden, dass Polyethylen (MFI=7,5 g/10min (ASTM D 1238); Dichte: 0,9155 g/cm³) in einem Extruder aufgeschmolzen wird und zwischen den beiden BOPP-Folien aufgetragen wird, wobei die BOPP-Folien durch Aushärtung des Polyethylens in der Weise verbunden werden, dass die Metallschicht und die Druckfarbe innen liegen. Die Polyethylenschicht hatte dabei eine Dicke von 10 µm.

### Beispiel 4 (Vergleichsbeispiel)

Eine metallisierte BOPP-Folie (CM 15 M der Fa. Walothen GmbH) und eine bedruckte BOPP-Folie (C 15 EHS der Fa. Walothen GmbH) werden durch Klebstoffkaschierung miteinander verbunden, so dass die Metallschicht und die Druckfarbe innen liegen.

Aus diesen Folien wurden an einer horizontalen Schlauchbeutelmaschine Beutel hergestellt (Siegeltemperatur: 130°C, Taktzahl: 50/min), wobei die Bedingungen für alle 4 Folienverbunde gleich waren.

Von einer Ecke der Bodennaht jedes Beutels wird anschließend ein Dünnschnitt angefertigt (15 µm Mikrotomschnitt) und dieser im polarisierten Licht vergrößert dargestellt. Auf diese Weise kann man die Kanüle, welche an dieser Stelle nach dem Siegelvorgang vorliegt, sichtbar machen und deren Größe abschätzen. Bei allen Folien wurden die Beutel an der selben Stelle auf die Kanülengröße untersucht. Je größer die Kanüle ist, desto geringer ist die Dichtigkeit der Packung. Aus den Bildern 2-5 wird deutlich, dass bei Verwendung der erfindungsgemäßen Verbundfolien besonders kleine Kanülen vorliegen, während bei Verwendung der Verbundfolie des Vergleichsbeispiels eine sehr große Kanüle vorliegt, was eine geringere Packungsdichtigkeit zur Folge hat.

## Patentansprüche

1. Verbundfolie aus einer siegelbaren, biaxial gereckten Polypropylenfolie (A), mit einer Siegelschicht und einer biaxial gereckten Polypropylenfolie (B), wobei die Polypropylenfolie (B) transparent oder bedruckt ist, **dadurch gekennzeichnet, dass** sich zwischen den Folien (A) und (B) mindestens eine Schicht aus Polyethylen befindet.

2. Verbundfolie nach Anspruch 1, **dadurch gekennzeichnet, dass** die Folien (A) und (B) jeweils eine Dicke von 12-30 µm aufweisen.

3. Verbundfolie nach Anspruch 1, **dadurch gekennzeichnet ,dass** die Schicht aus Polyethylen eine Dicke von 3-15 µm aufweist.

4. Verbundfolie nach Anspruch 1, **dadurch gekennzeichnet dass** die Schicht aus Polyethylen eine Dicke von 5-12 µm aufweist.

5. Verbundfolie nach Anspruch 1, **dadurch gekennzeichnet, dass** die Polypropylenfolie (A) eine im Vakuum aufgedampfte Barriereschicht trägt.

6. Verfahren zur Herstellung der Verbundfolie nach Anspruch 1, **dadurch gekennzeichnet, dass** die siegelbare biaxial gereckte Polypropylenfolie (A) auf eine Schicht aus Polyethylen **dadurch** aufgebracht wird, dass eine Folie aus Polyethylen (C) mit der biaxial gereckten, transparenten oder bedruckten Polypropylenfolie (B) unter erhöhtem Druck und erhöhter Temperatur verbunden wird und dieser Folienverbund (D) anschleißend mit der Polyethylenseite gegen die Polypropylenfolie (A) mittels Klebstoffauftrag kaschiert wird.

7. Verfahren nach Anspruch 6, **dadurch gekennzeichnet, dass** die Laminierung der Polyethylenfolie (C) mit der Polypropylenfolie (B) zum Folienverbund (D) entweder vor der biaxialen Orientierung der Polypropylenfolie (B) oder nach der biaxialen Orientierung der Polypropylenfolie (B) oder zwischen den beiden Orientierungsschritten in Maschinenrichtung bzw. quer zur Maschinenrichtung erfolgt.

8. Verfahren nach Anspruch 7, **dadurch gekennzeichnet, dass** die Polypropylenfolie (B) transparent ist und erst nach der Laminierung mit der Polyethylenfolie (C) auf der Polyethylenseite bedruckt wird.

9. Verfahren zur Herstellung der Verbundfolie nach Anspruch 1, **dadurch gekennzeichnet, dass** die Schicht aus Polyethylen **dadurch** aufgebracht wird, dass eine Folie aus Polyethylen (C) mit der Polypropylenfolie (A) unter erhöhtem Druck und erhöhter Temperatur verbunden wird und dieser Folienverbund (E) anschließend mit der Polyethylenseite gegen die Polypropylenfolie (B) mittels Klebstoffauftrag kaschiert wird.

10. Verfahren nach Anspruch 9, **dadurch gekennzeichnet, dass** die Laminierung der Polyethylenfolie (C) mit der Polypropylenfolie (A) zum Folienverbund (E) entweder vor der biaxialen Orientierung der Polypropylenfolie (A) oder nach der biaxialen Orientierung der Polypropylenfolie (A) oder zwischen den beiden Orientierungsschritten in Maschinenrichtung bzw. quer zur Maschinenrichtung erfolgt.

11. Verfahren nach Anspruch 9, **dadurch gekennzeichnet, dass** der Folienverbund (E), vor der Klebstoffkaschierung mit der Polypropylenfolie (B) auf der Polyethylenseite mit einer im Vakuum aufgedampften Barriereschicht versehen wird und mit der Seite, auf der die Barriereschicht liegt, gegen die Polypropylenfolie (B) mittels Klebstoffauftrag kaschiert wird,

12. Verfahren zur Herstellung der Verbundfolie nach einem der Ansprüche 1 bis 5, **dadurch gekennzeichnet, dass** die Zwischenschicht aus Polyethylen **dadurch** aufgebracht wird, dass das Polyethylen in einem Extruder aufgeschmolzen wird und zwischen den Polypropylenfolien (A) und (B) aufgetragen wird, wobei die Folien (A) und (B) durch Aushärtung des Polyethylens verbunden werden.

13. Verfahren nach Anspruch 12, **dadurch gekennzeichnet, dass** sich zwischen den Folien (A) und (B) mehrere Schichten aus Polyolefinen befinden, von denen mindestens eine Schicht aus Polyethlyen besteht und diese Schichten durch Coextrusion aufgetragen werden.

14. Verwendung einer Verbundfolie gemäß einem der Ansprüche 1 bis 5 als Verpackungsfolie.

## Claims

1. Composite film comprising a sealable, biaxially oriented polypropylene film (A) having a sealing layer, and a biaxially oriented polypropylene film (B), the polypropylene film (B) being transparent or printed, **characterized in that** between the films (A) and (B) there is at least one layer of polyethylene.

2. Composite film according to Claim 1, **characterized in that** the films (A) and (B) each have a thickness of 12-30 µm.

3. Composite film according to Claim 1, **characterized in that** the layer of polyethylene has a thickness of 3-15 µm.

4. Composite film according to Claim 1, **characterized in that** the layer of polyethylene has a thickness of 5-12 µm.

5. Composite film according to Claim 1, **characterized in that** the polypropylene film (A) carries a barrier layer applied by vapour deposition under vacuum.

6. Method of producing the composite film according to Claim 1, **characterized in that** the sealable, biaxially oriented polypropylene film (A) is applied to a layer of polyethylene by joining a film of polyethylene (C) with the biaxially oriented, transparent or printed polypropylene film (B) at increased pressure and elevated temperature, and subsequently laminating this film assembly (D) by the polyethylene side against the polypropylene film (A) by means of application of adhesive.

7. Method according to Claim 6, **characterized in that** the lamination of the polyethylene film (C) to the polypropylene film (B) to give the film assembly (D) takes place either before the biaxial orientation of the polypropylene film (B) or after the biaxial orientation of the polypropylene film (B) or between the two orientation steps in machine direction and transverse to the machine direction.

8. Method according to Claim 7, **characterized in that** the polypropylene film (B) is transparent and is printed on the polyethylene side only after lamination to the polyethylene film (C).

9. Method of producing the composite film according to Claim 1, **characterized in that** the layer of polyethylene is applied by joining a film of polyethylene (C) to the polypropylene film (A) at increased pressure and elevated temperature and then laminating this film assembly (E) by the polyethylene side to the polypropylene film (B) by means of application of adhesive.

10. Method according to Claim 9, **characterized in that** the lamination of the polyethylene film (C) to the polypropylene film (A) to give the film assembly (E) takes place either before the biaxial orientation of the polypropylene film (A) or after the biaxial orientation of the polypropylene film (A) or between the two orientation steps in machine direction and transverse to the machine direction.

11. Method according to Claim 9, **characterized in that** the film assembly (E), prior to adhesive lamination to the polypropylene film (B), is provided on the polyethylene side with a barrier layer applied by vapour deposition under vacuum, and is laminated by the side bearing the barrier layer to the polypropylene film (B) by means of application of adhesive.

12. Method of producing the composite film according to any of Claims 1 to 5, **characterized in that** the interlayer of polyethylene is applied by melting the polyethylene in an extruder and applying it between the polypropylene films (A) and (B), the films (A) and (B) being joined by curing of the polyethylene.

13. Method according to Claim 12, **characterized in that** between the films (A) and (B) there are a plurality of layers of polyolefins, of which at least one layer is composed of polyethylene, and these layers are applied by coextrusion.

14. Use of a composite film according to any of Claims 1 to 5 as packaging film.

## Revendications

1. Feuille composite constituée par une feuille en polypropylène (A), soudable, étirée biaxialement avec une couche soudable et une feuille en polypropylène (B) étirée biaxialement, où la feuille en polypropylène (B) est transparente ou imprimée, **caractérisée en ce qu'**au moins une couche en polyéthylène est située entre les feuilles (A) et (B).

2. Feuille composite selon la revendication 1, **caractérisée en ce que** les feuilles (A) et (B) présentent à chaque fois une épaisseur de 12 à 30 µm.

3. Feuille composite selon la revendication 1, **caractérisée en ce que** la couche en polyéthylène présente une épaisseur de 3 à 15 µm.

4. Feuille composite selon la revendication 1, **caractérisée en ce que** la couche en polyéthylène présente une épaisseur de 5 à 12 µm.

5. Feuille composite selon la revendication 1, **caractérisée en ce que** la feuille en polypropylène (A) porte une couche formant une barrière déposée en phase vapeur sous vide.

6. Procédé pour la préparation de la feuille composite selon la revendication 1, **caractérisé en ce que** la feuille en polypropylène (A) soudable, étirée biaxialement est appliquée sur une couche en polyéthylène **en ce qu'**on assemble une feuille en polyéthylène (C) avec la feuille en polypropylène (B) transparente ou imprimée, étirée biaxialement sous pression élevée et température élevée et cet assemblage de feuilles (D) est ensuite contrecollé avec la face de polyéthylène contre la feuille en polypropylène (A) en appliquant un adhésif.

7. Procédé selon la revendication 6, **caractérisé en ce que** le laminage de la feuille en polyéthylène (C) avec la feuille en polypropylène (B) en assemblage de feuilles (D) est réalisé soit avant l'orientation biaxiale de la feuille en polypropylène (B) soit après l'orientation biaxiale de la feuille en polypropylène (B) ou entre les deux étapes d'orientation respectivement dans le sens de la machine et dans le sens transversal par rapport au sens de la machine.

8. Procédé selon la revendication 7, **caractérisé en ce que** la feuille en polypropylène (B) est transparente et n'est imprimée qu'après le laminage avec la feuille en polyéthylène (C) sur la face de polyéthylène.

9. Procédé pour la préparation de la feuille composite selon la revendication 1, **caractérisé en ce que** la couche en polyéthylène est appliquée **en ce qu'**on assemble une feuille en polyéthylène (C) avec la feuille en polypropylène (A) sous pression élevée et température élevée et cet assemblage de feuilles (E) est ensuite contrecollé avec la face de polyéthylène contre la feuille en polypropylène (B) en appliquant un adhésif.

10. Procédé selon la revendication 9, **caractérisé en ce que** le laminage de la feuille en polyéthylène (C) avec la feuille en polypropylène (A) en assemblage de feuilles (E) est réalisé soit avant l'orientation biaxiale de la feuille en polypropylène (A) soit après l'orientation biaxiale de la feuille en polypropylène (A) ou entre les deux étapes d'orientation respectivement dans le sens de la machine et dans le sens transversal par rapport au sens de la machine.

11. Procédé selon la revendication 9, **caractérisé en ce que** l'assemblage de feuilles (E), avant le contrecollage avec un adhésif de la feuille en polypropylène (B) sur la face de polyéthylène est pourvu d'une couche formant une barrière déposée en phase vapeur sous vide et est contrecollé avec la face sur laquelle se trouve la couche formant une barrière contre la feuille en polypropylène (B) par application d'un adhésif.

12. Procédé pour la préparation de la feuille composite selon l'une quelconque des revendications 1 à 5, **caractérisé en ce que** la couche intermédiaire en polyéthylène est appliquée **en ce que** le polyéthylène est fondu dans une extrudeuse et appliqué entre les feuilles en polypropylène (A) et (B), les feuilles (A) et (B) étant assemblées par durcissement du polyéthylène.

13. Procédé selon la revendication 12, **caractérisé en ce que** plusieurs couches en polyoléfines se trouvent entre les feuilles (A) et (B), dont au moins une couche est constituée de polyéthylène et ces couches sont appliquées par coextrusion.

14. Utilisation d'une feuille composite selon l'une quelconque des revendications 1 à 5 comme feuille d'emballage.
